# EUROPEAN PATENT SPECIFICATION

(11) **EP 4 158 507 B1**
(45) Date of publication and mention of the grant of the patent: **25.02.2026**
(21) Application number: 21733544.7
(22) Date of filing: 28.05.2021
(51) Int. Cl.: G06F 21/44, H04W 12/06, H01L 23/544, G06F 21/73, H04L 9/40

(54) **CENTRALIZED HANDLING OF IC IDENTIFICATION CODES**
ZENTRALISIERTE HANDHABUNG VON IC-IDENTIFIKATIONSCODES
TRAITEMENT CENTRALISÉ DE CODES D'IDENTIFICATION IC

(30) Priority: 28.05.2020 US 202063030944 P
(43) Date of publication of application: 05.04.2023
(73) Proprietor: SandGrain B.V., 5656 AE Eindhoven (NL)
(72) Inventor: DOUMEN, Jeroen Mathias, 5656AE Eindhoven (NL); HOOIJMANS, Pieter Werner, 5656AE Eindhoven (NL); JUFFERMANS, Casparus Anthonius Henricus, 5656AE Eindhoven (NL)
(74) Representative: Hoyng Rokh Monegier B.V.
(86) International application number: PCT/IB2021/054666
(87) International publication number: WO 2021/240445

(56) References cited:
- EP-A1- 1 178 406
- WO-A1-2018/047981
- CN-A- 108 388 816
- KR-B1- 100 978 053
- US-A- 5 774 544
- US-A- 5 933 620
- US-A1- 2010 054 242
- US-A1- 2012 137 137
- US-A1- 2013 198 523
- US-A1- 2014 016 776
- US-A1- 2014 089 659
- US-A1- 2017 048 070
- US-A1- 2017 201 378
- US-B1- 6 629 061
- US-B1- 6 952 770
- US-B1- 7 535 249
- US-B1- 9 081 963
- US-B2- 10 129 035
- US-B2- 10 522 472
- US-B2- 10 841 087
- US-B2- 11 025 620
- US-B2- 7 454 169
- US-B2- 7 681 247
- US-B2- 8 151 110
- US-B2- 9 923 755

## Description

### TECHNICAL FIELD

The present invention relates to a method for handling identification codes of integrated circuits in a centralized code registration system, a method of manufacturing an integrated circuit for use with a centralized code registration system, a centralized code registration system, an integrated circuit for use with a centralized code registration system, and use of an integrated circuit with a centralized code registration system.

### BACKGROUND ART

Over the last three decades, integrated circuit (IC)-based identification and security-based technologies and associated devices have reached a broad set of applications. Well-known examples are public transport ticketing, smart card conditional access systems for TV subscriptions, SIM cards in mobile phones, electronic passports, banking or credit cards, and labeling for tracking and managing logistic flows and transport. Volumes associated with these applications run in the billions of ICs per year. However, there are potentially many more applications that could use these technologies, that could further multiply these volumes by several orders of magnitude, so indeed hundreds of billions or trillions of IC's. So far this is not happening for two fundamental reasons: security and cost.

A main problem in the world of identification and security is hacking. Existing identification and security applications are typically built around so-called secure microcontrollers. Microcontroller units (MCU) are required for functions like authentication or security key generation, and storing of the relevant data in such a way that it is not accessible for intruders. Because MCUs typically operate under an operating system and a specific program, e.g. firmware program, to execute the required functions, they are typically a combined hardware (HW) and software (SW) solution.

Known systems have as a major drawback that they can be hacked. This in practice means reverse engineering the function of the device by analyzing its HW and/or SW behavior, resulting in the discovery of e.g. a secret (cryptographic) key as typically required in these known systems and stored in a memory. In a worst-case scenario, the memory content of the device is altered, e.g. by increasing the amount of credits on a transit card or changing the balance on a bank card. Although suppliers of these ICs and systems implement measures to make their ICs robust to hacking, in the end most systems are vulnerable and can be hacked, albeit at often high technological effort.

The other problem with existing security solutions is related to cost. With high-volume applications of IC related security solutions, an obvious requirement is to have the IC cost as low as possible. Today's ICs typically cost a few dollar cents, which multiplies by a factor four for the final assembled module or package sales price. Elements that increase the IC cost are the MCU infrastructure and the programmable on-chip memories. Typical elements that increase the IC cost are:
- Secure MCUs are expensive, either as in-house development or as purchased IP, e.g. as ARM^{™} Secure Cores;
- MCUs are complex functions, and although the core is relatively small in advanced technology, it requires all kind of peripheral functionality to make it work properly: communication busses, memories (usually a combination of multiple specific memories, like RAM, ROM, Flash), start-on and advanced power management circuitry. So, the total function is much bigger, and requires serious design effort;
- The simplest identification products don't require re-programmable memories or keys. But even so, during manufacturing of the IC the code needs somehow be written in its memory. In most cases thus is done using One Time Programmable Read Only Memories (OTP-ROM), but these IP blocks are big, and require high voltage supply, making them large and thus expensive;
- More complex identification and security ICs have programmable key or data storage, which requires re-programmable Non-Volatile Memory (NVM), often also referred to as flash memory. But flash memories are expensive technology features, requiring - depending upon the size of the baseline CMOS node - 10 to 12 additional mask layers in production. This can be a cost adder of typically 35 to 30% compared to non-flash baseline technology wafer cost;
- Identification and security ICs have a complex Back End (BE) process in the assembly and packaging fab, since every ICs requires pre-programming with its secure SW and - in case of non-programmable ICs - the embedded keys or identifiers.

With high volumes of IC's there is a need for a cost effective yet secure solution for applying identification codes to the IC's. Moreover, the identification codes should be verifiable.

It is remarked that in general many methods of device, alternatively denoted asset authentication exist, and that in most if not all cases the solution in practice appears to be either complicated to execute, still be susceptible to some extend to some sort of spoofing and/or relatively expensive in view of typical use in end nod applications. Examples in this respect include patent publications US2016006735, US2012137137 and EP2506176A, with the first mentioned relating to a system of asserting the proper registration of chips (IC) during a mounting process of these chips in circuit boards as received in boxed lots, using a USB based, so-called JTAG scan controller instrument. The system thereto further uses a network and a central registration system applying hidden seeds and a signature algorithm before the thus finished boards are re-distributed. The system is however not generally applicable as an asset authenticating means. Amongst others this system requires active participation from the original IC fabricator. US20120137137 provides a system of storing a unique device key and safely conveying the same to a chip. In this system it is possible to renew the key and store the renewed key into the device, therewith intrinsically implying a vulnerability of such device to external mutation. The publication does not mention providing the device with a public identifier. European publication EP2506176A is associated with securely provisioning, storing and transmitting providing a cryptographic key into a flexible memory of an IC. In general the known prior art has the disadvantage that they depart from a common, i.e. identical integrated circuit with flexible memory that is individualized in a later stage. The manner of conduct not only raises costs of the system, but also introduces additional security risks into the system. The present invention at least seeks to alleviate if not eliminate at least part of the draw backs in any of these known systems.

### SUMMARY OF THE INVENTION

The present invention aims to provide a centralized solution for managing and verifying identification codes of integrated circuits (IC's). The present invention is particularly useful with, but not limited to, large number of IC's each having a unique identification.

The present invention enables identification and security solutions that are much cheaper at the high-volume customer or user end of the chain, and shift complex security functionality away from those end nodes.

The present invention is defined by the claims, which also determine the scope of protection of this patent.

According to one aspect of the invention, a method is proposed for handling identification codes (also called asset identifiers) of integrated circuits, preferably in a centralized code registration system. The method can comprise storing the identification codes in a first data storage. The method can further comprise storing one or more operator keys associated with an operator code in a second data storage. Herein, storing means the action of putting data in a data storage or having data stored in a data storage available for use. The second data storage can be separate from the first data storage. The identification codes can be associated with integrated circuits. Each integrated circuit can comprise an identifier (also called a chip identifier) and the operator code. An identification code of an integrated circuit can be obtainable from a mathematical operation on the identifier using an operator key from the second data storage, wherein the operator key can be associated with the operator code. The method can comprise calculating identifiers for identification of integrated circuits using a mathematical operation on identification codes, therein using said one or more operator code associated operator keys. Also, each calculated identifier and the operator code is associated with an integrated circuit, such that each integrated circuit comprises a calculated identifier and the operator code, and an identification code of an integrated circuit may be obtainable from a mathematical operation on the identifier using the operator code associated operator key.

With a method according to the present invention, it is made at least virtually impossible to become knowledgeable about what has been registered in the first data storage about an integrated circuit based on its identifier, thereby rendering it difficult if not impossible to link stored information to a particular integrated circuit. Additionally the method and system according to the invention, favourably renders it virtually impossible to predict valid identifiers.

In further elaboration, the method of the invention may comprise that the operator keys associated with one or more operator codes are stored in a second data storage, wherein the second data storage is separate from the first data storage. In addition or alternatively, the method may be further elaborated upon by having said calculating of an identifier (CID) and said obtaining of an identification code (AID) from an integrated circuit associated identifier (CID) handled in a centralized code registration system (3a). With such a further measure according to the present invention, different types of data can be secured in appropriate manners. For example key material and algorithm can be kept isolated in a highly secured place or storage system, while day-to-day data can be stored in a relatively more accessible place.

According to an aspect of the invention a centralized code registration system is proposed. The centralized code registration system can comprise a first data storage configured to store the identification codes. The centralized code registration system can further comprise a second data storage configured to store operator keys associated with an operator code. The second data storage can be separate from the first data storage. The identification codes can be associated with integrated circuits. Each integrated circuit can comprise an identifier and the operator code. An identification code of an integrated circuit can be obtainable from a mathematical operation on the identifier using an operator key from the second data storage.

In the first data storage the identification codes of each of the integrated circuits are stored. In each of the integrated circuits an identifier is stored. In the centralized code registration system, the identifiers of the integrated circuits can be linked to the identification codes stored in the first data storage using the mathematical operation, which is depending on the operator key stored in the second data storage. The identifier may be readable to anyone, i.e. not requiring any security means to prevent the identifier from being read from the integrated circuit. Although security measures are possible, the identification codes may be stored in the first data storage without a need for securing the identification codes from being hacked, i.e. read unauthorized. The second data storage is typically a highly secured data storage to prevent the operator keys from being accessible unauthorized. Without the operator key an identifier of an integrated circuit cannot be linked to an identification code stored in the first data storage, thereby creating a secured centralized solution for managing and verifying identification codes of integrated circuits.

A chip identifier may represent an anonymized version of an asset identifier,

The mathematical operation is preferably performed in a secured part of the centralized code registration system to prevent the link between an identifier and an identification code being exposable to hackers. The mathematical operation may be performed in a same secured computer environment where the second data storage is a part of.

In an embodiment the mathematical operation may be implemented as or make use of a look-up table. The chip identifier may e.g. be stored in a look-up table and/or obtained from a look-up table using the mathematical operation. The mathematical operation may e.g. comprise storing and/or obtaining the chip identifier from a look-up table. The second data storage may be implemented as a look-up table.

The operator keys are associated with an operator code. Hereto the operator code may be stored together with the operator keys in the second data storage. Alternatively, the operator code may be stored in a separate data storage and associated with the operator keys using known technologies, such as using database keys or database links. The operator code may be stored in a data storage of the centralized code registration system or in a database external to the centralized code registration system.

The first data storage, the second data storage and/or the separate data storage are typically based on computer databases.

The following are embodiments of the method for handling identification codes and the centralized code registration system.

In an embodiment the centralized code registration system can be configured to obtain the operator key from the second data storage based on the operator code and perform the mathematical operation on the identifier using the operator key as a cryptographic key. The mathematical operation is e.g. an AES based decryption operation.

This advantageously enables identification codes to be reused for different operator codes, resulting in different identifiers in the integrated circuits if the operator key is different for different operator codes. This enables e.g. different batches of integrated circuits to be assigned to different clients, different product groups or any other differentiation, while having assigned the same identification codes to the integrated circuits.

In an embodiment the second data storage is a secure data storage. A security protocol can be used for accessing the second data storage. Preferably the security protocol comprising an encrypted data communication with the second data storage and/or the operator key being stored in the second data storage in an encrypted format requiring decryption before use in the mathematical operation. With the mathematical operation executed in, what is to be denominated a vault, and the latter equipped with computing means, at least with computing means as are implied by the use of using a data storage in general, and by the use of a database in particular, the invention in a new and favourable manner utilizes otherwise known and even standard available components, including all of hardware security module and type of calculation.

In an embodiment the identifier and the operator code can be hard coded in a read-only memory of the integrated circuit. The identifier and the operator code can be stored in two separate read-only memories. Alternatively, the identifier and the operator code can be stored in the same read-only memory, possibly as a single binary value. It may be taken for granted that hard coded in the context of integrated circuits implies an immutable read only memory in an integrated circuit. More in particular in the present context, the hard coding preferably also includes that the coding of an integrated circuit with an identifier is performed as part of the circuit manufacturing, i.e. that a foundry or part thereof such as a mid end or back end thereof may be provisioned with identifiers, causing the chips to be produced uniquely coded. Since the system of the invention relies on exchange of information with a database system, a thus uniquely coded chip may therein be activated upon request by a customer or operator of the integrated circuit, e.g. upon taking the chip into use for identifying an asset, which may be of any, preferably electronically connectable type including so called PCB.

In an embodiment the centralized code registration system can be configured to verify the identification code obtained from the mathematical operation against the identification codes stored in the first data storage. Thus, it may be established if the identifier of the integrated circuit is valid.

In an embodiment a verifying device can request the identifier from the integrated circuit via an end node device. The end node device can read the identifier and the operator code from the integrated circuit and transmit the identifier and the operator code to the centralized code registration system. The centralized code registration system can obtain the identification code from the identifier by performing the mathematical operation on the identifier based on the operator code. The centralized code registration system can verify the obtained identification code against the stored identification codes to obtain and output a verification result.

In an embodiment the verification result can be indicative for a match of the obtained identification code in the stored identification codes.

In an embodiment the verification result can be at least partly based on contextual data, the contextual data preferably including one or more of a number of verifying requests made in a predefined time interval, a total number of verifying requests made, a time of a verifying request, a geographical location of the integrated circuit, a geographical location from where a verifying request is made.

In an embodiment he verification result can be transmitted from the centralized code registration system to the verifying device and/or the end node device.

In an embodiment the identifier can be transmitted to the centralized code registration system via the verifying device.

In an embodiment the centralized code registration system can register the identification code as being invalid in case of a negative verification result, resulting in future verification results for this identification code to be negative by default.

In an embodiment the integrated circuit can comprise a first read-only register comprising the identifier, a second read-only register comprising the operator code, and an interface for reading the identifier and the operator code from the first and second read-only registers and outputting the identifier and operator code. It is possible that the first read-only register and the second read-only register are the same.

In an embodiment the functionality of the integrated circuit can be limited to providing the identifier and the operator code upon request. This allows the integrated circuit to be relatively simple, not requiring an MCU. The integrated circuit may be a part of another integrated circuit, possibly an MCU.

In an embodiment the identification code can be activated in the first data storage upon implementation, e.g. upon validation of a lithographic writing operation of the identifier in the integrated circuit.

In an embodiment the identification code can be unique and therefore used only once amongst a plurality of integrated circuits. In this embodiment an identification code may be reused for different operator codes, while being unique for one operator code.

In an embodiment the centralized code registration system can be implemented as a cloud service.

In an embodiment the first data storage and the second data storage can be implemented as separated cloud services. This measure of the present invention favorably renders privacy by design and raises the level of security in the system in that it enables the two databases to be situated also physically at different places, and at least to provide these with different security and access measures. It is also a prerequisite to arrive at yet a further measure of the invention, i.e. to accommodate the second database in a so-called vault system.

According to an aspect of the invention a method of manufacturing an integrated circuit is proposed. The integrated circuit is for use in a method for handling identification codes as described above. The method can comprise generating an identification code in a centralized registration system. The identification code is preferably a bit-code of predefined length and associated to an operator code. The method can further comprise storing, in a first storage of the centralized code registration system, the identification code. The method can further comprise optionally storing, in a second data storage of the centralized code registration system, an operator key associated with the operator code. The second data storage can be separate from the first data storage. The method can further comprise generating an identifier using a mathematical operation on the identification code using the operator key. The method can further comprise providing the identifier and the operator code to an IC manufacturing facility. The identifier and the operator code can be hard-coded in the integrated circuit.

The identifier and the operator code may be hard-coded in a single read-only memory. The identifier and the operator code may be hard-coded in two separate read-only memories.

According to an aspect of the invention an integrated circuit is proposed comprising an identifier and an operator code hard-coded in the integrated circuit. The identifier is preferably a bit-code of predefined length. The integrated circuit is for use with a centralized code registration system as described above.

In an embodiment the integrated circuit can comprise a first read-only register storing the identifier. A second read-only register can comprise the operator code. The integrated circuit can comprise an interface for reading the identifier and the operator code from the first and second read-only registers and outputting the identifier and the operator code.

In an embodiment the integrated circuit can comprise an SPI (Serial Peripheral Interface) and control logic for obtaining the identifier from the first read-only register on a request received via the control logic. The integrated circuit can further comprise one or more voltage inputs. The integrated circuit can further comprise one or more signal inputs. The integrated circuit can further comprise a signal output for outputting the identifier.

In an embodiment the integrated circuit can be one of: miniature SO8-packaged, SSOP8-packaged, TSSOP8-packaged or 8WLCSP-packaged for board-level applications; RF-ID compatible; integrated in a multi-chip package; integrated as IP block in a larger IC.

According to an aspect of the invention a use of an integrated circuit as described above is proposed, for use with a centralized code registration system as described above.

There is no security vulnerability at end node devices through the simple use of the identifier stored in the IC. Cost can be reduced since authentication means are performed centralized. No authentication measures are needed at the end node device.

The invention is scalable over orders of magnitude, from tens to billions of nodes. The availability of coding space is no problem at all (e.g. 10³⁸ in case of 128-bit identifiers) and the end nodes can be so small and cheap that they allow deployment in very large numbers. The invention allows putting individual electronic identifiers at a level not attainable today. Think of tagging all individual products in a supermarket or store, all elements in complex logistics chains (e.g. aircraft or car assembly) or all ICs (by embedding an IC inside a larger IC package).

Clients of the centralized code registration system can choose at which level they want to uniquely code their products. E.g. high turn-over goods (beer bottles or cans, food) could be coded by production batches with codes that have a time-limited validity. This is yet another scalability factor of the present invention.

The identifiers linkable to the identification codes may be used as a connected electronic bar code. But whereas todays printed bar codes are identical for all instantiations of the same product, the identifiers in the ICs are electronic and can, if chosen so, be different at individual product level. The usage of the identifiers in the ICs may be tracked through a cloud connection, allowing for "big data" analysis and possible interaction with the end node device to take security measures.

The centralized code registration system may be distributed among multiple servers or multiple networked computers while functioning as a centralized system.

The system enables owners/users to set up a secure data information system on the use of their products.

It may be evident that the present invention in fact, in an industrially new manner sets forth a method of generating and authenticating guaranteed unique identifiers as may be used for identifying and authenticating assets comprising an integrated circuit, the method comprising generating guaranteed unique identification codes in a centralized code registration system, storing the generated identification codes within a data storage, associating each identification code with a unique identifier to be used for identifying an integrated circuit, by applying a bijective algorithm, and authenticating an identifier by inversely calculating an identification code from an identifier based on said algorithm, as well as to a system comprising a centralized system provided with a computer based algorithm for executing such method of generating and authenticating guaranteed unique identifiers.

Aspects and embodiments of the invention are further described in the following description and in the claims.

### BRIEF DESCRIPTION OF THE DRAWINGS

Embodiments will now be described, by way of example only, with reference to the accompanying schematic drawings in which corresponding reference symbols indicate corresponding parts, and in which:
FIG. 1 shows an exemplary data storage configuration in a centralized code registration system according to an aspect of the invention;
FIG. 2 shows another exemplary data storage configuration in a centralized code registration system according to an aspect of the invention;
FIG. 3 shows another exemplary data storage configuration in a centralized code registration system according to an aspect of the invention;
FIG. 4 shows and abstract representation of an exemplary IC according to an aspect of the invention;
FIG. 5 shows and exemplary IC according to an aspect of the invention;
FIG. 6 shows an exemplary flow chart of a method of manufacturing an integrated circuit according to an aspect of the invention;
FIG. 7 shows an exemplary flow chart of a method of handling identification codes of integrated circuits according to an aspect of the invention; and
FIG. 8 shows an exemplary architecture of a system wherein the invention may be applied.

The figures are intended for illustrative purposes only, and do not serve as restriction of the scope or the protection as laid down by the claims.

### DESCRIPTION OF EMBODIMENTS

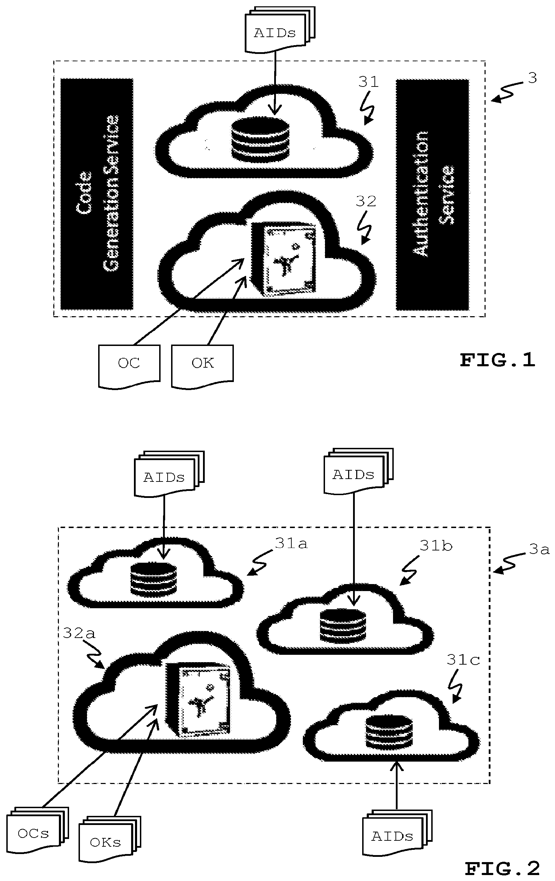

FIG. 1 shows an exemplary centralized code registration system 3, such as may e.g. be implemented in a manner known per se using a server. The centralized code registration system 3 includes a first data storage 31 and a second data storage 32. The data storages are typically implemented as databases. The first data storage 31 may store the identification codes AIDs of ICs, also called asset identifier AID. The second data storage 32 may store one or more operator keys OKs.

A mathematical operation performed in the centralized code registration system 3 may generate an identifier of an IC from an identification code AID using an operator key OK, and vice versa. Identifiers are stored in the ICs and may thus be verified against identification codes AIDs stored in the first data storage 31. Herein, the mathematical operation may be a look-up table operation.

The operator key OK may be associated with an operator code OC. This allows identification codes AIDs to be reused for different operator codes, by applying different operator keys depending on the operator code.

The first data storage 31 need not be highly secured. In fact, the identification codes AIDs cannot be linked to an IC, i.e. to a chip identifier CID of the IC, as long as the mathematical operation and/or the operator keys OKs are secured. The second data storage 32 and the mathematical operation are preferably secured, e.g. using cryptographic data storage, secured communication protocols and/or secure execution environments.

The centralized code registration system 3 may include an authentication service, enabling an authentication request for an IC to be received and processed. The identifier of an IC may then be received by the authentication service and verified against the stored identification codes AIDs, using the mathematical operation to obtain the identification code of the identifier.

The centralized code registration system 3 may include a code generation service, enabling identification codes and identifiers to be generated and prepared for implementing in ICs. The latter may include the generation of GDSII files for use by an IC manufacturing foundry, where the identifier may be written into a read only memory of the IC.

Thus, metadata related to a chip identifier CID may be separated from the chip identifier CID. An operator may see a chip identifier CID, without knowing to which asset record, i.e. asset identifier AID this chip identifier CID belongs. The two can preferably only be connected via and by the second data storage 32, e.g. a second secure database, effectively constituting a vault as it were. Rather than revealing the relation between the two identifiers CID and AID, or the combination thereof, the secure database or vault may after having established a relation, output a verification result, e.g. in the form of a 'yes' or a 'no'. In this manner neither the operator, nor the secure database or a verifying functionality provider will ever become aware which chip identifier CID belongs to which asset identifier AID as long as the two are maintained separate and the secure database is effectively maintained secure in a manner known per se. The effect of the use of two separate data storages 31, 32, e.g. two separate databases, with one of which possibly being secure for holding a secret look-up table or operator key, is not only that asset holders may effectively and relatively economically rely on a centralized authentication service. The latter in turn may hence be used as part of a set of security measures. With such a system and method of authenticating assets, security functionality may attractively be shifted from end nodes to a centralized service system, implying that neither security measures nor security costs need to be distributed over each of these end nodes. Rather, the end nodes in such a system, provided that these are provided unchangeable, e.g. through hard coding thereof in a chip, may be provided with a simple electronically readable code, to the extent that it may even simply be maintained publicly readable.

A centralized code registration system 3a may store identification codes AIDs for different operator codes OCs. An example hereof is shown in FIG. 2, where data storage 31a, data storage 31b and data storage 31c are each similar to first data storage 31 and each store identification codes AIDs for different operator codes OCs. In the example of FIG. 2 the operator codes OCs are stored associated with the operator keys OKs in the second data storage 32a.

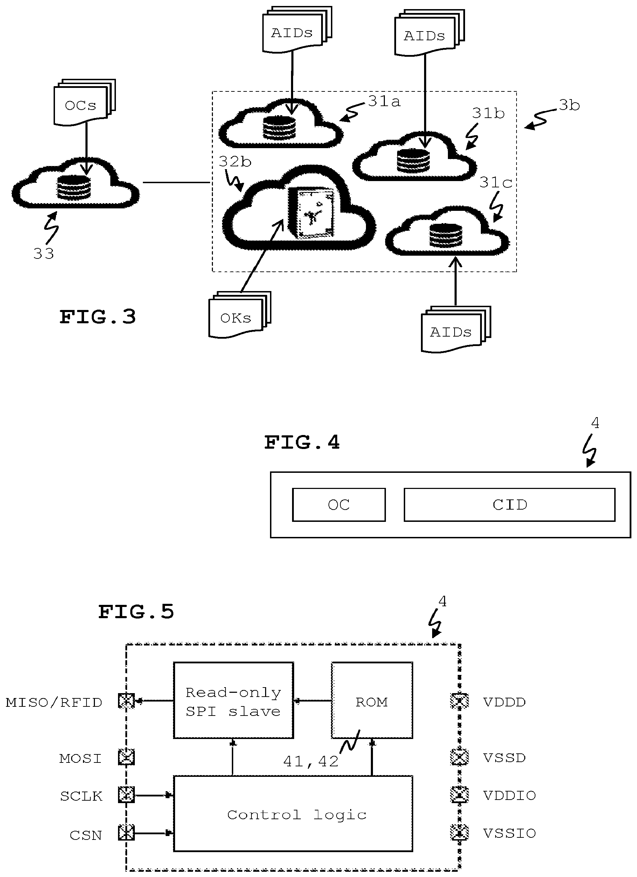

The operator codes OCs may be stored in a separate database 33, such as shown in FIG. 3. The operator codes OCs in the separate database 33 and the operator keys OKs stored in second data storage 32b may be associated using known database structures, e.g. using database links or any other data structure. The separate database 33 may be part of or external to a centralized code registration system 3b.

FIG. 4 is an abstract representation of an IC, wherein an operator code OC and an identifier CID have been stored in a memory, typically a read-only memory. The identifier CID is preferably unique amongst all ICs for a same operator code OC, but it is possible to use the same identifier in different ICs for a different operator code. Identifiers CID may be reused for different operator codes OC.

FIG. 5 shows an exemplary IC 4. The IC 4 may include one or more ROM registers 41, 42, e.g. a 32-bit (4x8) ROM 41 embedding a 32-bit operator code and a 128-bit (16x8) ROM 42 embedding a 128-bit identifier. The IC 4 may include an interface, here embodied in the form of a Serial Peripheral Interface (SPI) and control logic for outputting the identifier on a request received via the Control logic. The IC 4 may include voltage inputs, such as VDDD, VSSD, VDDIO and VSSIO. The IC 4 may further include signal inputs, such as MOSI (Master Output Slave Input), SCLK (Serial CloCK) and CSN (Chip Select Not). The IC 4 may further include a signal output, such as MISO (Master Input Slave Output) or any other output such as an RFID output.

It will be understood that the IC 4 is not limited to having SPI-based interfaces. Other non-limiting examples of interfaces that may be used in the IC 4 are serial interface like I2C or I2S, 3-wire, 1-wire, USB or a classical 13,56MHz RF-ID contactless interface. Moreover, it will be understood that the IC 4 is not limited to 4x8 and 16x8 ROM registers and that any other read-only register may be used for storing operator codes and identifiers of any bit length. It is possible to store the operator code OC and the identifier CID in a single memory, e.g. a single ROM of 160 bits.

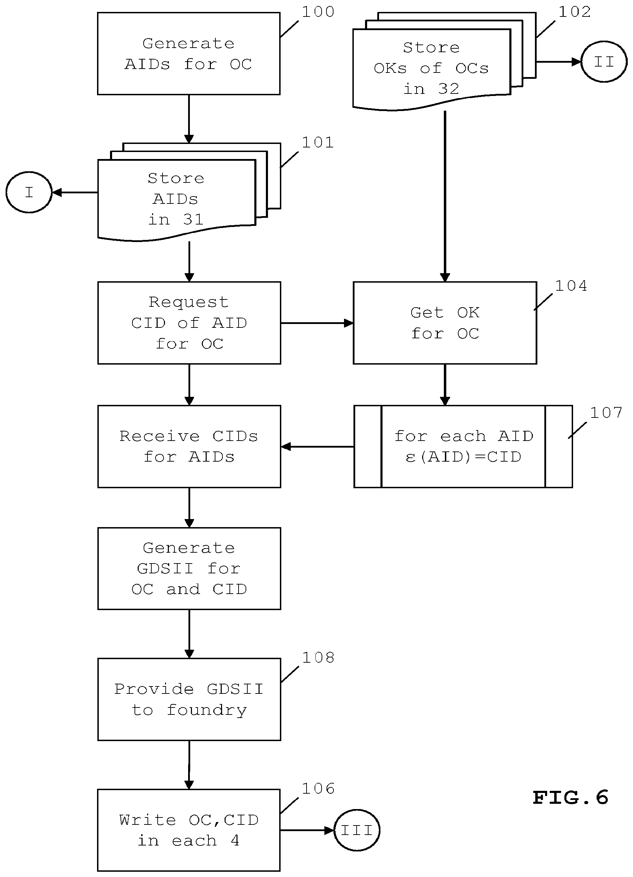

In FIG. 6 a flow chart is shown of an exemplary method performed in a centralized code registration server 3, 3a, 3b for generating identification codes AIDs and implementing the corresponding identifiers CIDs in the ICs. The steps in the left column of FIG. 6 may be performed in a less secure part of the centralized code registration system 3. The steps in the right column of FIG. 6 are preferably performed in a secured part of the centralized code registration system 3.

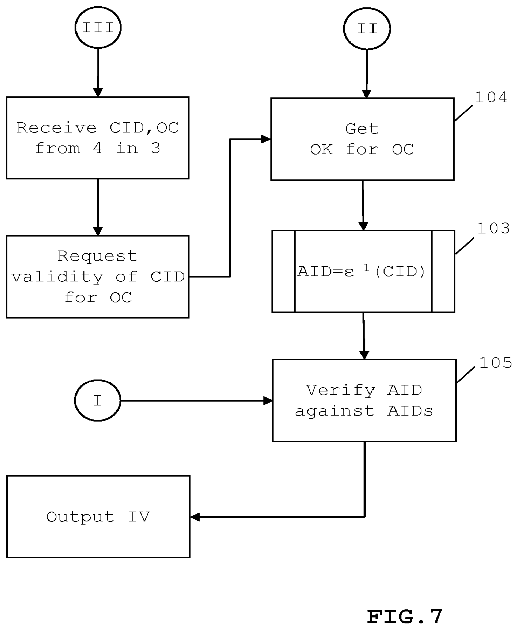

In step 100 one or more identification codes AIDs are generated which, using the computing means associated with controlling a storage 31a-31c is performed in a deterministic manner, i.e. guaranteeing the uniqueness of an AID as generated. This step 100 typically is the first time that the identification codes AIDs are generated for a specific operator code OC. Hence the system of the invention guarantees that AID values are at least unique within a set to be associated with an operator code OC. In step 101 the identification codes AIDs are stored in the first data storage 31. The identification codes AIDs may be used later when verifying the authenticity of ICs based on the identifier of the IC, which is depicted by the roman I (see also FIG. 7).

For the generated identification code AID an identifier to be stored in the IC is to be generated. Hereto the identifier is requested and in step 104 the operator key OK for the operator code OC is obtained from a data storage, which as indicated here and according to preference is the indicated second data storage 32. One or more operator keys OKs for the operator code OC may have been generated and stored in step 102. The operator keys OKs may be used later when verifying the authenticity of ICs based on the identifier of the IC, which is depicted by the roman II (see also FIG. 7).

In step 107 a mathematical operation ε may be performed on the identification code AID to obtain the identifier CID. This is depicted as ε(AID)=ID. The mathematical operation may use the operator key OK, for example as a cryptographic encryption key in an AES-based cryptographic mathematical operation.

The thus obtained identifier CID and the operator code OC may be provided to an IC manufacturing foundry. Hereto the CIDs for the AIDs may be received. This receipt may be at another place than the place of request, e.g. a secure box at a lithographic machine writing a chip. There may be an interruption in the linking process by request to and operation of a second database in the right-hand side column.

For example, a GDSII file may be generated based on the identifier CID and the operator code OC, which GDSII file may be provided to the foundry in step 108. In step 106 the GDSII file, or any other data file enabling the foundry to create the IC, may be used to write the identifier CID and the operator code OC to a memory portion of a wafer forming a part of an IC 4.

The identifier CID and operator code IC stored in the IC 4 may be used later when verifying the authenticity of ICs, which is depicted by the roman III (see also FIG. 7).

In an embodiment, to generate a per-chip unique - e.g. 128-bit - identifier CID an intermediate encoding may be used. First, every operator that intends to encode ICs may receive a unique and secret operator key OK, e.g. a 128-bits or any other bit length key. The operator key OK is preferably kept in a secure location such as the second data storage 32, for example in a central software vault processing center (e.g. HSM) of the centralized code registration system 3. All computations that require encoding or decoding with this operator key OK preferably only take place within this central vault. If now a series of *n* ICs require an identifier CID, a list of *n* numbers may be generated, in its most simple form just the list 1, 2, ...., *n*-1, *n.* These numbers may be or represent the identification codes AIDs to be stored in the first data storage 31. This list may be passed to a vault processing unit, which encodes encrypts these *n* numbers using the mathematical operation based on the operator key OK. This preferably happens inside the vault, and preferably only the list of identifiers CIDs thus obtained is received as output from the vault. The CIDs - e.g. ID1, ID2, ...., ID*n* of 128 bits, or any other length, each - that may be processed into a GDSII file, transmitted to a mid-end fab and written on the *n* ICs.

Although stealing (essentially copying) of such a series of CIDs doesn't give any advantage to a hacker, it would be annoying and therefore the transmission of the n identifiers CIDs from the vault to the factory may be secured using e.g. standard AES encryption techniques.

Instead of every IC being coded individually, an operator may e.g. decide to code groups of ICs with the same CID per batch, per production day, per production location, etcetera. Of course, this reduces the identification level to such a group, but for fast turnover products (fresh food, beer bottles) this might be more than enough.

Once produced the ICs carrying their - possibly unique - identifier CID may be physically attached to a device they are expected to identify. This can be a tag, a bank note, another IC in a multi-chip package, a PCB board, module or complete device or machine, all to be decided by the operator. At any moment the identifier CID of such a device can be read, using the interface provided by the IC.

In FIG. 7 a flow chart is shown of an exemplary method performed in a centralized code registration server 3, 3a, 3b for handling identification codes AIDs of ICs 4. The steps in the left column of FIG. 7 may be performed in a less secure part of the centralized code registration system 3. The steps in the right column of FIG. 7 are preferably performed in a secured part of the centralized code registration system 3.

An identifier CID and operator code OC may be received from an IC in the centralized code registration server 3, e.g. via the authentication service shown in FIG. 1. The identifier CID may be verified by checking the identifier CID against the stored identification codes AIDs in the first data storage 31. Hereto a request of the validity of the identifier CID for the received operator code OC may be transmitted to a secured part of the centralized code registration system 3.

In step 104 the operator key OK associated with the operator code OC may be retrieved from the second data storage 32. In step 103 a mathematical operation ε⁻¹ may be performed on the identifier CID to obtain the identification code AID. This is depicted as AID=ε⁻¹(CID). The mathematical operation may use the operator key OK, for example as a cryptographic decryption key in an AES-based cryptographic mathematical operation.

In step 105 the thus obtained identification code AID may be verified against the stored identification codes AIDs to determine its authenticity. Indirect, the authenticity of the identifier CID may thus be verified. The result of the verification may be output as a verification result IV.

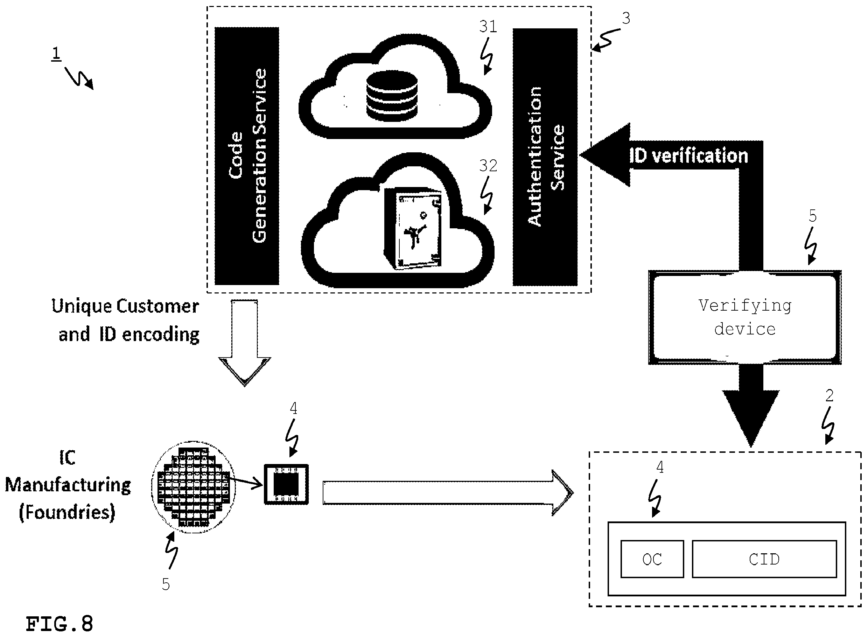

FIG. 8 shows an exemplary authentication system 1 wherein the centralized code registration system 3 may be used. The authentication system 1 may include one or more end node devices 2 each containing an IC 4 embedded with an identifier CID and an operator code OC. The authentication system 1 may further include a verifying device 5 for requesting the identifier CID and the operator code OC from the end node device 2 and ultimately from the IC 4. The authentication system 1 includes the centralized code registration system 3, such as shown in FIG. 1.

The IC 4 is typically linked to an asset. The asset is e.g. an electronic device like a peripheral device, an industrial device or a medical device, or any taggable good like packing material or consumer goods. The assets have in common that they are identifiable by a combination of the identifier CID and the operator code OC. It is possible that the end node device itself is the asset.

Querying of an IC 4 for its identifier may result in sending the identifier CID and the operator code OC to the centralized code registration system 3, and the centralized code registration system 3 providing a verification result indicative of an authentication result. The identifier CID and the operator code OC are typically transmitted to the centralized code registration system 3 after a request from the verifying device 5. The identifier CID and the operator code OC may be transmitted from an end node device 2 to the centralized code registration system 3 via the verifying device 5 and/or via any other intermediate communication device (not shown). The centralized code registration system 3 may then verify the identifier CID against stored identification codes AIDs to obtain a verification result. The verification result may be communicated to the verifying device 5, the end node device 2 or any other computer system.

In case an identifier CID and an operator code OC are used in a non-authorized combination, the centralized registration system 3 may return a negative verification result indicative of a failed authentication. Alternatively or additionally, in case of a negative verification result the centralized registration system 3 may block the identification code from any future use, resulting in future verification results for this identification code to be negative by default.

An identifier CID may be generated before or during the production process of ICs 4. This is illustrated in FIG. 8 as the code generation service that generates and stores the identification codes AIDs in the first data storage 31 of the centralized registration system 3. Identifiers CIDs generated from the identification codes AIDs using the mathematical operation may be transmitted to the IC Manufacturing (Foundries), for example in the form of GDSII files for writing memory portions 41,42 of the IC 4.

The ICs 4 are preferably manufactured in a cost-efficient manner, typically involving a lithography back-end processes followed by a so-called mid-end lithographic process step. In the back-end process the dies on a wafer 5 may be prepared to a common design, e.g. in a CMOS based, front end lithographic operation typically applying masked lithographic equipment. The front-end operation may be used to write the operator code OC to the wafer, as the same operator code OC is typically used multiple times. In the subsequent mid-end process step, a wafer based maskless lithographic operation may manipulate a predefined CMOS based IC for encoding each die of a wafer with the identifier CID - possibly a unique identifier - generated by the code generation service. The operator code OC may be written in the mid-end processing step instead of the front-end processing.

The implementation of the identifier CID in the mid-end lithographic process step advantageously allows commonly known and cost-effective front-end processes to remain unmodified. The mid-end lithographic process step may be integrated as a maskless lithography operation, which is found to be very suitable for uniquely encoding IC based electronic devices. In such a set-up maximum advantage may be taken from cost reduction as has over the past decades been effected in so called front-end chap manufacturing fab's or so-called foundries.

Advantageously, in the authentication system 1 according to the present invention, most or all security may be transferred to the centralized code registration system 3, which is preferably implemented in the cloud. Every application system, e.g. retail, may have its own first data storage 31 with the registered identification codes AIDs of ICs 4 that have been produced and as many associated data labels as are required (dates, type of product, manufacturer, etcetera). These data labels may be stored, together with or associated with operator codes OCs in the first data storage 31 or any other data storage. When an IC 4 is queried for its identifier CID, the identifier CID may be sent to the centralized code registration system 3 for verification of its validity, possibly with a simple "Yes" (or other indication of a positive verification result) or "No" (or other indication of a negative verification result) as outcome.

The centralized code registration system 3 may take the context of verification requests into account in processing the current verification request. Examples hereof are a number of requests made in a predefined time interval, the total number of requests made, time of the request, location of the request, and etcetera. Contextual information may be transmitted as contextual data from the verifying device 5 to the centralized code registration system 3 and/or generated in the centralized code registration system 3. Part or all of the contextual data may be generated in the end node device 2, 2a-2d.

Hackers may want to try to replicate or falsify end node devices 2 or ICs 4. Duplication of an end node 2 with IC 4 in an authentication system 1 no longer makes any sense, because this may immediately be detected, and the identification code AID and thereby the IC 4 be blocked for use. Although identifiers CIDs can in principle be public - there is nothing to hide - they may be encrypted during communication with the centralized code registration system 3. In other words, hacking an end node 2 or IC 4 does not make any sense, all security processing takes place in the centralized code registration system 3. The IC 4 thus acts as a hardware anchor (e.g. to attach the code to a physical device) in an otherwise centralized secure system 3. So, although the end nodes 2 and ICs 4 could be hacked (e.g. copied), the system 1 remains secure.

## Claims

1. A method for handling identification codes (AIDs) of integrated circuits (4), the method comprising:
storing (101) the identification codes (AIDs) in one or more first data storages (31a-31c);
storing (102) one or more operator keys (OKs) associated with an operator code (OC) in one of a first and a second data storage (31, 32),
calculating identifiers (CIDs) for identification of integrated circuits (4) using a mathematical operation on identification codes (AIDs), therein using said one or more operator code (OC) associated operator keys (OKs),
wherein each calculated identifier (CID) and the operator code (OC) is associated with an integrated circuit (4), such that each integrated circuit (4) comprises a calculated identifier (CID) and the operator code (OC),
wherein an identification code (AID) of an integrated circuit (4) is obtainable from a mathematical operation (103) on the identifier (CID) using the operator code (OC) associated operator key (OK).

2. The method according to claim 1, wherein said calculating of an identifier (CID) and said obtaining of an identification code (AID) from an integrated circuit associated identifier (CID) are handled in a centralized code registration system (3a), in particular wherein the centralized code registration system (3) is configured to verify (105) the identification code (AID) obtained from the mathematical operation (103) against the identification codes (AIDs) stored in the first data storage (31).

3. The method according to claim 1 or 2, wherein the operator keys associated with one or more operator codes are stored in a second data storage (32), wherein the second data storage (32) is separate from the first data storage (31), in particular
wherein the code registration system (3) is configured to obtain (104) the operator key (OK) from the second data storage (32) based on the operator code (OC) and perform the mathematical operation (103) on the identifier (CID) using the operator key (OK) as a cryptographic key, and/or
wherein the second data storage (32) is a secure data storage, and wherein the method further comprises using a security protocol for accessing the second data storage, preferably the security protocol comprising an encrypted data communication with the second data storage (32) and/or the operator key (OK) being stored in the second data storage (32) in an encrypted format requiring decryption before use in the mathematical operation (103).

4. The method according to any one of the preceding claims, wherein the identifier (CID) and the operator code (OC) are retrieved from a read-only memory (41, 42) of the integrated circuit (4).

5. The method according to any one of the preceding claims, further comprising:
requesting, by a verifying device (5), the identifier (CID) from the integrated circuit (4) via an end node device (2);
reading, by the end node device (2), the identifier (CID) and the operator code (OC) from the integrated circuit (4) and transmitting the identifier (CID) and the operator code (OC) to the centralized code registration system (3);
obtaining, by the centralized code registration system (3), the identification code (AID) from the identifier (CID) by performing the mathematical operation (103) on the identifier (CID) based on the operator code (OC); and
verifying (105), in the centralized code registration system (3), the obtained identification code (AID) against the stored identification codes (AIDs) to obtain and output a verification result (IV), in particular comprising transmitting the verification result (IV) from the centralized code registration system (3) to the verifying device (5) and/or the end node device (2).

6. The method according to claim 5, wherein the verification result (IV) is at least partly based on contextual data, the contextual data preferably including one or more of a number of verifying requests made in a predefined time interval, a total number of verifying requests made, a time of a verifying request, a geographical location of the integrated circuit, a geographical location from where a verifying request is made, in particular comprising transmitting the identifier (CID) to the centralized code registration system (3) via the verifying device (5).

7. The method according to any one of the preceding claims, wherein the identification code (AID) has been activated in the first data storage (31) upon implementation, e.g. upon validation of a lithographic writing operation of the identifier (CID) in the integrated circuit (4).

8. The method according to any one of the preceding claims, wherein the identification code (AID) is provided unique, e.g. by using an enumeration algorithm, and therefore used only once amongst a plurality of integrated circuits (4).

9. A method of manufacturing an integrated circuit (4), the integrated circuit (4) for use in a method according to any one of the claims 1-8, the method comprising:
generating (100) an identification code (AID) for an operator code (OC) in wherein the identification code (AID) is a bit-code of predefined length;
storing (101), in a first storage (31) of the code registration system (3), the identification code (AID);
storing (102), in a data storage (32) of the code registration system (3), an operator key (OK) associated with the operator code (OC);
generating a chip identifier (CID) using a mathematical operation (107) on the identification code (AID) using the operator key (OK); and
providing the identifier (CID) and the operator code (OC) to an IC manufacturing facility, where the identifier (CID) and the operator code (OC) are hard-coded in the integrated circuit (4).

10. A method of manufacturing according to claim 9, in which the storage (32) of the code registration system (3) and the associated operator key (OK) is a second storage (32), separate from the first storage (31), in particular
in which the registration system is a centralized registration system (3).

11. A centralized code registration system (3), comprising:
a first data storage (31) configured to store the identification codes (AIDs); and
a second data storage (32) configured to store operator keys (OKs) associated with an operator code (OK), wherein the second data storage (32) is separate from the first data storage (31),
wherein the identification codes (AIDs) are associated with integrated circuits (4), wherein each integrated circuit (4) comprises an identifier (CID) and the operator code (OC), and
wherein an identification code (AID) of an integrated circuit (4) is obtainable from a mathematical operation (103) on the identifier (CID) using an operator key (OK) from the second data storage (32), in particular arranged to perform the method according to any one of the claims 1-8.

12. A system comprising a centralized system provided with a computer based algorithm for executing the method according to any one of claims 1-10.

## Patentansprüche

1. Verfahren zum Handhaben von Identifikationscodes (AIDS) von integrierten Schaltungen (4), wobei das Verfahren umfasst:
Speichern (101) der Identifikationscodes (AID) in einem oder mehreren ersten Datenspeichern (31a-31c);
Speichern (102) eines oder mehrerer Bedienerschlüssel (OK), die einem Bedienercode (OC) zugeordnet sind, in einem von einem ersten und einem zweiten Datenspeicher (31, 32),
Berechnen von Kennungen (CID) zur Identifikation von integrierten Schaltungen (4) unter Verwendung einer mathematischen Operation an Identifikationscodes (AID), wobei der eine oder die mehreren Bedienerschlüssel (OK), die dem Bedienercode (OC) zugeordnet sind, verwendet werden,
wobei jede berechnete Kennung (CID) und der Bedienercode (OC) einer integrierten Schaltung (4) zugeordnet sind, so dass jede integrierte Schaltung (4) eine berechnete Kennung (CID) und den Bedienercode (OC) umfasst,
wobei ein Identifikationscode (AID) einer integrierten Schaltung (4) aus einer mathematischen Operation (103) an der Kennung (CID) unter Verwendung des Bedienerschlüssels (OK), der dem Bedienercode (OC) zugeordnet ist, erzielt werden kann.

2. Verfahren nach Anspruch 1, wobei das Berechnen einer Kennung (CID) und das Erzielen eines Identifikationscodes (AID) einer Kennung (CID), die einer integrierten Schaltung zugeordnet ist, in einem zentralisierten Coderegistrierungssystem (3a) gehandhabt werden, wobei insbesondere das zentralisierte Coderegistrierungssystem (3a) dazu konfiguriert ist, den Identifikationscode (AID), der aus der mathematischen Operation (103) erzielt wird, gegenüber den Identifikationscodes (AID), die in dem ersten Datenspeicher (31) gespeichert sind, zu verifizieren.

3. Verfahren nach Anspruch 1 oder 2, wobei die Bedienerschlüssel, die einem oder mehreren Bedienercodes zugeordnet sind, in einem zweiten Datenspeicher (32) gespeichert werden, wobei der zweite Datenspeicher (32) von dem ersten Datenspeicher (31) getrennt ist, insbesondere
wobei das Coderegistrierungssystem (3) dazu konfiguriert ist, den Bedienerschlüssel (OK) aus dem zweiten Datenspeicher (32) basierend auf dem Bedienercode (OC) zu erzielen und die mathematische Operation (103) an der Kennung (CID) unter Verwendung des Bedienerschlüssels (OK) als kryptographischen Schlüssel vorzunehmen, und/oder
wobei der zweite Datenspeicher (32) ein gesicherter Datenspeicher ist, und das Verfahren ferner die Verwendung eines Sicherheitsprotokolls zum Zugreifen auf den zweiten Datenspeicher umfasst, wobei das Sicherheitsprotokoll bevorzugt eine verschlüsselte Datenkommunikation mit dem zweiten Datenspeicher (32) umfasst, und/oder der Bedienerschlüssel (OK) in dem zweiten Datenspeicher (32) in einem verschlüsselten Format gespeichert wird, das vor seiner Verwendung in der mathematischen Operation (103) eine Entschlüsselung erfordert.

4. Verfahren nach einem der vorhergehenden Ansprüche, wobei die Kennung (CID) und der Bedienercode (OC) aus einem Festspeicher (41, 42) der integrierten Schaltung (4) abgerufen werden.

5. Verfahren nach einem der vorhergehenden Ansprüche, ferner umfassend:
Anfragen, durch eine Verifizierungsvorrichtung (5), der Kennung (CID) von der integrierten Schaltung (4) über eine Endknotenvorrichtung (2);
Lesen, durch die Endknotenvorrichtung (2), der Kennung (CID) und des Bedienercodes (OC) aus der integrierten Schaltung (4), und Senden der Kennung (CID) und des Bedienercodes (OC) an das zentralisierte Coderegistrierungssystem (3);
Erzielen, durch das zentralisierte Coderegistrierungssystem (3), des Identifikationscodes (AID) aus der Kennung (CID), indem die mathematische Operation (103) an der Kennung (CID) basierend auf dem Bedienercode (OC) vorgenommen wird; und
Verifizieren (105), in dem zentralisierten Coderegistrierungssystem (3), des erzielten Identifikationscodes (AID) gegenüber den gespeicherten Identifikationscodes (AID), um ein Verifizierungsergebnis (IV) zu erzielen und auszugeben, was insbesondere das Senden des Verifizierungsergebnisses (IV) von dem zentralisierten Coderegistrierungssystem (3) an die Verifizierungsvorrichtung (5) und/oder an die Endknotenvorrichtung (2) umfasst.

6. Verfahren nach Anspruch 5, wobei das Verifizierungsergebnis (IV) mindestens teilweise auf kontextabhängigen Daten basiert, wobei die kontextabhängigen Daten bevorzugt eine oder mehrere einer Anzahl von Verifizierungsanfragen, die in einem vordefinierten Zeitintervall gestellt werden, eine Gesamtanzahl von gestellten Verifizierungsanfragen, ein Zeitpunkt einer Verifizierungsanfrage, einen geographischen Standort der integrierten Schaltung und einen geographischen Standort, von dem aus eine Verifizierungsanfrage gestellt wird, umfassen, was insbesondere das Senden der Kennung (CID) an das zentralisierte Coderegistrierungssystem (3) über die Verifizierungsvorrichtung (5) umfasst.

7. Verfahren nach einem der vorhergehenden Ansprüche, wobei der Identifikationscode (AID) in dem ersten Datenspeicher (31) bei der Umsetzung, beispielsweise bei der Bestätigung, eines lithographischen Schreibvorgangs der Kennung (CID) in der integrierten Schaltung (4), aktiviert wurde.

8. Verfahren nach einem der vorhergehenden Ansprüche, wobei der Identifikationscode (AID) als einzigartig, zum Beispiel unter Verwendung eines Aufzählungsalgorithmus, bereitgestellt wird und demnach nur einmal bei einer Vielzahl von integrierten Schaltungen (4) verwendet wird.

9. Verfahren zum Herstellen einer integrierten Schaltung (4), wobei die integrierte Schaltung (4) für eine Verwendung in einem Verfahren nach einem der Ansprüche 1 bis 8 bestimmt ist, wobei das Verfahren umfasst:
Generieren (100) eines Identifikationscodes (AID) für einen Bedienercode (OC), wobei der Identifikationscode (AID) ein Bitcode vordefinierter Länge ist;
Speichern (101) des Identifikationscodes (AID) in einer ersten Speichervorrichtung (31) des Coderegistrierungssystems (3),
Speichern (102), in einem Datenspeicher (32) des Coderegistrierungssystems (3), eines Bedienerschlüssels (OK), der dem Bedienercode (OC) zugeordnet ist;
Generieren einer Chip-Kennung (CID) unter Verwendung einer mathematischen Operation (107) an dem Identifikationscode (AID) unter Verwendung des Bedienerschlüssels (OK); und
Bereitstellen der Kennung (CID) und des Bedienercodes (OC) für eine IC-Herstellungseinrichtung, wo die Kennung (CID) und der Bedienercode (OC) in der integrierten Schaltung (4) fest codiert werden.

10. Herstellungsverfahren nach Anspruch 9, wobei der Speicher (32) des Coderegistrierungssystems (3) und des dazugehörigen Bedienerschlüssels (OK) ein zweitet Speicher (32) ist, der von dem ersten Speicher (31) getrennt ist, insbesondere
wobei das Registrierungssystem ein zentralisiertes Registrierungssystem (3) ist.

11. Zentralisiertes Coderegistrierungssystem (3), umfassend:
einen ersten Datenspeicher (31), der zum Speichern der Identifikationscodes (AID) konfiguriert ist; und
einen zweiten Datenspeicher (32), der zum Speichern von Bedienerschlüsseln (OK), die einem Bedienercode (OK) zugeordnet sind, bestimmt ist, wobei der zweite Datenspeicher (32) von dem ersten Datenspeicher (31) getrennt ist,
wobei die Identifikationscodes (AIDS) den integrierten Schaltungen (4) zugeordnet sind, wobei jede integrierte Schaltung (4) eine Kennung (CID) und den Bedienercode (OC) umfasst, und
wobei ein Identifikationscode (AID) einer integrierten Schaltung (4) aus einer mathematischen Operation (103) an der Kennung (CID) unter Verwendung eines Bedienerschlüssels (OK) aus dem zweiten Datenspeicher (32) erzielt werden kann, insbesondere dazu angeordnet, das Verfahren nach einem der Ansprüche 1 bis 8 auszuführen.

12. System, umfassend ein zentralisiertes System, das über einen computerbasierten Algorithmus verfügt, um das Verfahren nach einem der Ansprüche 1 bis 10 auszuführen.

## Revendications

1. Procédé permettant de gérer des codes d'identification (AIDS) de circuits intégrés (4), le procédé comprenant les étapes consistant à :
stocker (101) les codes d'identification (AID) dans une ou plusieurs premières mémoires de données (31a-31c) ;
stocker (102) une ou plusieurs clés d'opérateur (OK) associées à un code opérateur (OC) dans l'une d'une première et d'une deuxième mémoire de données (31, 32),
calculer des identifiants (CID) pour l'identification de circuits intégrés (4) en utilisant une opération mathématique sur des codes d'identification (AID), tout en utilisant ledit un ou les plusieurs clés d'opérateur (OK) associées à un code opérateur (OC),
dans lequel chaque identifiant calculé (CID) et le code opérateur (OC) sont associés à un circuit intégré (4), de sorte que chaque circuit intégré (4) comprend un identifiant calculé (CID) et le code opérateur (OC),
dans lequel un code d'identification (AID) d'un circuit intégré (4) peut être obtenu à partir d'une opération mathématique (103) sur l'identifiant (CID) en utilisant la clé d'opérateur (OK) associée à un code opérateur (OC).

2. Procédé selon la revendication 1, dans lequel ledit calcul d'un identifiant (CID) et ladite obtention d'un code d'identification (AID) à partir d'un identifiant (CID) associé à un circuit intégré sont gérés dans un système d'enregistrement de code centralisé (3a), en particulier dans lequel le système d'enregistrement de code centralisé (3) est configuré pour vérifier (105) le code d'identification (AID) obtenu à partir de l'opération mathématique (103) par rapport aux codes d'identification (AID) stockés dans la première mémoire de données (31).

3. Procédé selon la revendication 1 ou 2, dans lequel les clés d'opérateur associées à un ou plusieurs code opérateurs sont stockées dans une deuxième mémoire de données (32), la deuxième mémoire de données (32) étant séparée de la première mémoire de données (31), en particulier
dans lequel le système d'enregistrement de code (3) est configuré pour obtenir (104) la clé d'opérateur (OK) à partir de la deuxième mémoire de données (32) sur la base du code opérateur (OC), et pour effectuer l'opération mathématique (103) sur l'identifiant (CID) en utilisant la clé d'opérateur (OK) comme une clé cryptographique, et/ou
dans lequel la deuxième mémoire de données (32) est une mémoire de données sécurisée, et le procédé comprenant en outre l'utilisation d'un protocole de sécurité pour accéder à la deuxième mémoire de données, dans lequel le protocole de sécurité comprend de préférence une communication de données cryptée avec la deuxième mémoire de données (32) et/ou la clé d'opérateur (OK) est stockée dans la deuxième mémoire de données (32) sous un format crypté nécessitant un décryptage avant son utilisation dans l'opération mathématique (103).

4. Procédé selon l'une quelconque des revendications précédentes, dans lequel l'identifiant (CID) et le code opérateur (OC) sont récupérés dans une mémoire morte (41, 42) du circuit intégré (4).

5. Procédé selon l'une quelconque des revendications précédentes, comprenant en outre les étapes consistant à :
demander, par un dispositif de vérification (5), l'identifiant (CID) du circuit intégré (4) par l'intermédiaire d'un dispositif de nœud d'extrémité (2) ;
lire, par le dispositif de nœud d'extrémité (2), l'identifiant (CID) et le code opérateur (OC) à partir du circuit intégré (4) et transmettre l'identifiant (CID) et le code opérateur (OC) au système d'enregistrement de code centralisé (3) ;
obtenir, par le système d'enregistrement de code centralisé (3), le code d'identification (AID) à partir de l'identifiant (CID) en effectuant l'opération mathématique (103) sur l'identifiant (CID) sur la base du code opérateur (OC) ; et
vérifier (105), dans le système d'enregistrement de code centralisé (3), le code d'identification (AID) obtenu par rapport aux codes d'identification (AID) stockés pour obtenir et sortir un résultat de vérification (IV), comprenant en particulier la transmission du résultat de vérification (IV) du système d'enregistrement de code centralisé (3) au dispositif de vérification (5) et/ou au dispositif de nœud d'extrémité (2).

6. Procédé selon la revendication 5, dans lequel le résultat de vérification (IV) est au moins partiellement basé sur des données contextuelles, les données contextuelles comprenant de préférence une ou plusieurs d'un nombre de demandes de vérification effectuées dans un intervalle de temps prédéfini, un nombre de demandes de vérification effectuées, une heure d'une demande de vérification, un lieu géographique du circuit intégré, et un lieu géographique d'où une demande de vérification est effectuée, comprenant en particulier la transmission de l'identifiant (CID) au système d'enregistrement de code centralisé (3) par l'intermédiaire du dispositif de vérification (5).

7. Procédé selon l'une quelconque des revendications précédentes, dans lequel le code d'identification (AID) a été activé dans la première mémoire de données (31) à la mise en œuvre, par exemple à la validation d'une opération d'écriture lithographique de l'identifiant (CID) dans le circuit intégré (4).

8. Procédé selon l'une quelconque des revendications précédentes, dans lequel le code d'identification (AID) est fourni de manière unique, par exemple en utilisant un algorithme d'énumération, et est par conséquent utilisé une seule fois parmi une pluralité de circuits intégrés (4).

9. Procédé de fabrication d'un circuit intégré (4), le circuit intégré (4) étant destiné à une utilisation dans un procédé selon l'une quelconque des revendications 1 à 8, le procédé comprenant les étapes consistant à :
générer (100) un code d'identification (AID) pour un code opérateur (OC) dans lequel le code d'identification (AID) est un code binaire d'une longueur prédéfinie ;
stocker (101) le code d'identification (AID) dans une première mémoire (31) du système d'enregistrement de code (3) ;
stocker (102), dans une mémoire de données (32) du système d'enregistrement de code (3), une clé d'opérateur (OK) associée au code opérateur (OC) ;
générer un identifiant de puce (CID) en utilisant une opération mathématique (107) sur le code d'identification (AID) en utilisant la clé d'opérateur (OK) ; et
fournir l'identifiant (CID) et le code opérateur (OC) à une installation de fabrication de CI où l'identifiant (CID) et le code opérateur (OC) sont codés de façon permanente dans le circuit intégré (4).

10. Procédé de fabrication selon la revendication 9, dans lequel la mémoire (32) du système d'enregistrement de code (3) et de la clé d'opérateur (OK) associée est une deuxième mémoire (32), séparée de la première mémoire (31), en particulier
dans lequel le système d'enregistrement est un système d'enregistrement centralisé (3).

11. Système d'enregistrement de code centralisé (3), comprenant :
une première mémoire de données (31) configurée pour stocker les codes d'identification (AID) ; et
une deuxième mémoire de données (32) configurée pour stocker les clés d'opérateur (OK) associées à un code opérateur (OK), la deuxième mémoire de données (32) étant séparé de la première mémoire de données (31),
dans lequel les codes d'identification (AIDS) sont associés à des circuits intégrés (4), chaque circuit intégré (4) comprenant un identifiant (CID) et le code opérateur (OC), et
dans lequel un code d'identification (AID) d'un circuit intégré (4) peut être obtenu à partir d'une opération mathématique (103) sur l'identifiant (CID) en utilisant une clé d'opérateur (OK) provenant de la deuxième mémoire de données (32), en particulier agencé pour effectuer le procédé selon l'une quelconque des revendications 1 à 8.

12. Système comprenant un système centralisé pourvu d'un algorithme à base informatique pour exécuter le procédé selon l'une quelconque des revendications 1 à 10.
